## Europäisches Patentamt
## European Patent Office
## Office européen des brevets

(19)

(11) Numéro de publication: **0 041 467 B1**

(12)

# FASCICULE DE BREVET EUROPEEN

(45) Date de publication du fascicule du brevet:
15.02.84

(51) Int. Cl.³: **B 01 D 13/00,** B 65 H 71/00, A 61 M 1/03, F 28 F 21/06

(21) Numéro de dépôt: 81420082.0

(22) Date de dépôt: 01.06.81

(54) Procédé d'obtention de faisceaux de fibres creuses empotés à leurs extrémités.

(30) Priorité: 04.06.80 FR 8012699

(43) Date de publication de la demande:
09.12.81 Bulletin 81/49

(45) Mention de la délivrance du brevet:
15.02.84 Bulletin 84/7

(84) Etats contractants désignés:
BE CH DE GB IT LI NL SE

(56) Documents cités:
FR - A - 2 231 421
FR - A - 2 247 565
FR - A - 2 351 041

(73) Titulaire: HOSPAL INDUSTRIE, 7, Avenue Lionel Terray,
F-69330 Meyzieu (FR)

(72) Inventeur: Francisoud, Jacques, 5b, rue Francisque
Jomard, F-69600 Oullins (FR)
Inventeur: Ollivier, Christian, Le Mas Subellin, Seyssuel
F-38200 Vienne (FR)

(74) Mandataire: Vogt, Bernard et al, RHONE-POULENC
RECHERCHES Centre de Recherches de Saint-Fons
Service Brevets B.P. 62, F-69190 Saint-Fons (FR)

## Procédé d'obtention de faisceaux de fibres creuses empotés à leurs extrémités

La présente invention concerne un procédé d'empotage de fibres creuses.

De nombreux procédés sont connus pour l'obtention de faisceaux de fibres creuses ayant leurs extrémités empotées. On peut citer par exemple le brevet américain US-A No 3730959, dans lequel des fibres creuses disposées sous la forme d'un faisceau sont tout d'abord mises dans un récipient contenant un liquide aqueux sous forme de gel; seule la surface active des fibres du faisceau est placée dans ce gel. L'extrémité du faisceau dépasse dudit gel et, pour l'empotage des fibres, on coule à la surface dudit liquide aqueux une matière collante dont la densité est inférieure à celle dudit liquide aqueux sous forme de gel. Une fois que la prise en masse de la matière collante est obtenue, on sort le faisceau du récipient, on élimine par lavage le gel restant autour des fibres et on ouvre les fibres creuses par tronçonnage de la matière collante durcie. Un tel procédé est long, peu commode à mettre en œuvre, et il est difficile de faire passer la matière collante entre toutes les fibres creuses du faisceau.

Dans le brevet américain US-A No 3579810, on enroule des fibres creuses autour de deux tiges parallèles entre elles, puis on trempe successivement chaque tige dans une matière d'empotage que l'on laisse durcir autour des fibres. On sectionne ensuite cette matière d'empotage une fois durcie. Un tel procédé est long et peu commode à mettre en œuvre, et il est difficile de faire passer la matière d'empotage entre toutes les fibres et d'éviter les phénomènes de mèche, c'est-à-dire d'éviter que la matière d'empotage ne remonte le long des fibres au-delà de la zone d'empotage prévue.

Par les brevets américains US-A Nos 3442002 et 3492698, on connaît un procédé d'empotage de fibres creuses sous la forme d'un faisceau par utilisation d'un procédé et d'un dispositif d'ultracentrifugation. Dans ce procédé, le faisceau de fibres est disposé avant l'empotage dans une enveloppe constituant une partie de l'enceinte de l'appareil final. Ce procédé, intéressant pour l'empotage de faisceaux à section circulaire, est moins adopté pour l'empotage de faisceaux à section rectangulaire par exemple. Comme les autres procédés décrits ci-dessus, il ne permet pas d'empoter simultanément les deux extrémités du faisceau. D'autre part, ce procédé se prête difficilement à une automatisation ou à une semi-automatisation.

Dans le brevet américain US-A No 4138460, il est décrit un procédé pour l'obtention d'un faisceau empoté, de section quelconque, à partir d'un câble de fibres creuses. Ce procédé consiste essentiellement à disposer autour dudit câble un moule ayant des caractéristiques particulières, composé de trois parties isolées thermiquement entre elles et dont les parties d'extrémité sont parcourues par un fluide refroidissant. Ce procédé est long à mettre en œuvre et exige un moule compliqué. En outre, il ne permet par d'obtenir un faisceau empoté directement dans une partie de l'enceinte devant constituer l'appareil final à fibres creuses.

Par le brevet américain US-A No 4038190, on connaît un procédé dans lequel les deux extrémités d'un faisceau de fibres sont empotées simultanément dans une partie de l'enceinte de l'appareil final. Ce procédé, plus spécialement représenté fig. 14 et 15 et décrit colonne 9, lignes 14 à 62, nécessite pour l'empotage des fibres d'arrêter de temps à autre la roue tournante polygonale sur laquelle sont disposées des gouttières, c'est-à-dire des parties de l'enceinte de l'appareil à fibres creuses que l'on cherche à obtenir. Ce procédé présente ainsi l'inconvénient de nécessiter des arrêts de la roue tournante, ce qui entraîne des pertes de temps et des variations dans les tensions des fibres.

Un but de la présente invention est donc un procédé ne présentant pas les inconvénients des procédés de l'art antérieur. Plus précisément, un but de la présente invention est un procédé permettant d'obtenir de façon indépendante soit des faisceaux de fibres creuses empotés à leurs deux extrémités, soit des faisceaux de fibres creuses empotés chacun dans une partie de l'enceinte de chaque appareil final à fibres creuses, soit des faisceaux de fibres creuses empotés à leur extrémité et maintenus chacun par un élément interne (par exemple une chicane) de l'appareil à fibres creuses que l'on cherche à obtenir.

Un autre but de la présente invention est un procédé permettant d'obtenir simultanément une pluralité de faisceaux empotés.

Un autre but de la présente invention est un procédé automatisable d'empotage de fibres creuses.

Un autre but de la présente invention est un procédé dans lequel on est certain que chaque fibre est encollée.

Il a maintenant été trouvé, et c'est ce qui fait l'objet de la présente invention, un procédé pour l'obtention simultanée d'une pluralité de faisceaux de fibres creuses empotés à leurs extrémités, chaque faisceau étant éventuellement solidaire par ses empotages d'un élément de l'appareil final à fibres creuses, procédé dans lequel au moins une fibre creuse est entraînée par un dispositif tournant, qui enroule la fibre autour de lui-même et permet ainsi de réaliser avec cette dernière un écheveau dont le périmètre est de forme polygonale et dont l'axe de rotation, correspondant à celui du dispositif tournant, est sensiblement perpendiculaire à la direction d'avancement de la fibre vers ledit dispositif, caractérisé en ce que ladite fibre creuse est encollée à intervalles prédéterminés lors de son avancement vers ledit dispositif tournant, et en ce qu'après avoir obtenu un écheveau de section voulue de fibres creuses on le coupe vers les endroits empotés pour obtenir chacun des faisceaux.

Dans la présente invention, on désigne par l'expression fibres creuses des fibres généralement de forme tubulaire, comportant en leur sein un canal continu disposé sensiblement selon l'axe de la fibre. Eventuellement, les fibres peuvent être de section ellipsoïdale ou polygonale. Les fibres utilisables peuvent être de tout type connu et en tout matériau naturel, artificiel ou synthétique. Elles peuvent même être en verre ou en silicone. En particulier, il peut s'agir des fibres mentionnées dans les brevets français FR-A Nos 1307979, 1586563, 2017387 et américain US-A No 3674628. Ces fibres peuvent être homogènes, microporeuses ou anisotropes (c'est-à-dire à peau). Elles peuvent être obtenues par voie fondue, par voie sèche (évaporation de solvant) ou par voie humide (coagulation). La nature précise des fibres est choisie en fonction de l'application envisagée pour l'appareil final; naturellement, pour des opérations de simples échanges thermiques, les fibres creuses utilisées seront imperméables aux fluides circulant sur leurs parois externe et/ou interne et en matériaux tels que ceux décrits notamment dans le brevet américain US-A No 3315740.

Le diamètre externe des fibres creuses utilisées dans le procédé selon la présente invention est fonction de l'utilisation de l'appareil à fibres creuses que l'on réalise. Si cet appareil est utilisé pour des opérations de simples échanges thermiques ou par exemple pour récupérer des calories fournies par l'énergie solaire, les fibres creuses peuvent avoir un diamètre compris entre 0,3 et 3 mm et leurs parois peuvent avoir une épaisseur comprise entre 0,1 et 1 mm. Pour des appareils utilisés dans le domaine médical, comme reins ou poumons artificiels par exemple, le diamètre externe des fibres est généralement inférieur à 750 µm, de préférence inférieur à 500 µm et généralement supérieur à 5 µm. L'épaisseur de leur paroi est alors généralement comprise entre 1 et 100 µm.

Il doit être également précisé que le mot faisceau signifie des tronçons de fibres creuses à peu près identiques quant à leur longueur, lesdits tronçons étant empotés à chacune de leurs extrémités. Lesdits faisceaux peuvent être de section quelconque; généralement ils sont de section circulaire, mais ils peuvent être également de section carrée ou rectangulaire. De plus, les fibres creuses dans un faisceau ne sont pas forcément toutes parallèles entre elles. Elles peuvent être constituées de torsades telles que celles décrites dans le brevet français FR-A No 2231787 et son certificat d'addition FR-A No 2265883. D'autre part, dans un faisceau par exemple de section rectangulaire, les nappes successives de fibres sont avantageusement légèrement croisées entre elles grâce au mouvement d'un guide-fil agissant, lors de la formation de l'écheveau, sur le dispositif tournant selon une technique bien connue dans l'industrie textile.

La description du procédé selon la présente invention sera mieux comprise à l'aide des figures ci-jointes qui illustrent de façon schématique, à titre d'exemples non limitatifs et sans échelle déterminée, des appareillages pour sa mise en œuvre.

La fig. 1 est une vue d'ensemble d'un mode de réalisation d'un appareillage pour la mise en œuvre du procédé selon la présente invention.

La fig. 2 est une vue partielle d'un autre mode de réalisation d'un appareillage pour la mise en œuvre du procédé.

La fig. 3 est une vue partielle d'un mode de réalisation préférentiel d'un appareillage pour la mise en œuvre du procédé.

La fig. 4 est une coupe selon son axe longitudinal d'un appareil à fibres creuses pouvant être obtenu avec le procédé selon la présente invention.

La fig. 5 est une coupe transversale de l'appareil de la fig. 4 selon V-V.

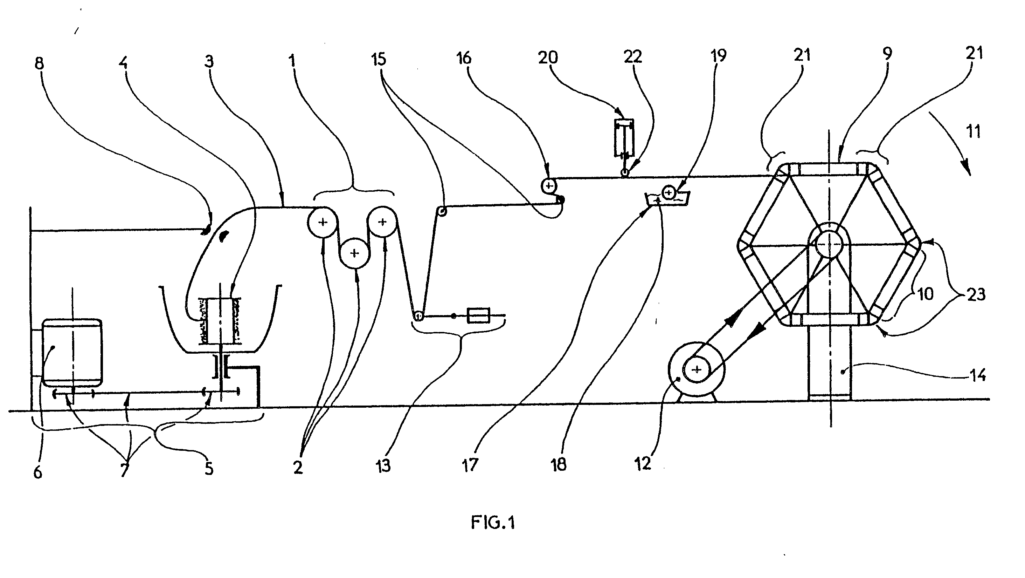

L'appareillage représenté fig. 1 comprend un dispositif 1 composé de trois cylindres moteurs 2, ledit dispositif 1 servant à dévider les fibres 3 de la bobine 4, en les entraînant par exemple à vitesse constante. Sur cette bobine 4 se trouvent deux fibres creuses qui peuvent être torsadées entre elles, comme cela est décrit dans le brevet français FR-A No 2231787 et son certificat d'addition FR-A No 2265883. La bobine 4 est solidaire d'un dispositif 5 comprenant un moteur 6 et des engrenages 7 qui permettent de torsader les fibres 3 lors de leur entraînement par les cylindres 2. Ainsi, les fibres 3 sur la bobine 4 peuvent être déjà torsadées entre elles ou pas. Si les fibres creuses sont déjà torsadées, le dispositif 5 peut permettre à loisir d'augmenter, de diminuer ou de maintenir en l'état le degré de torsadage des fibres creuses sur la bobine 4 au cours de leur avancement vers le dispositif 1. Les fibres 3 passent par un guide-fil 8 au sortir de la bobine 4. Depuis le dispositif d'entraînement, les fibres creuses 3 se dirigent vers un dispositif tournant 9 consistant en une roue polygonale sur laquelle sont disposées des coquilles 10 dans lesquelles les fibres creuses 3 sont placées, lors de la rotation de la roue 9, suivant le sens de la flèche 11. Ces coquilles 10, mieux représentées fig. 5, ont une section transversale dont la forme est en auge, c'est-à-dire que leur section interne est de forme sensiblement rectangulaire. Ces coquilles 10 sont fixées par tous moyens connus sur la roue tournante 9 — voir par exemple le brevet américain US-A No 4038190 — entraînée par un moteur 12. Cette roue tournante, supportée par le bâti 14, est entraînée à vitesse variable, car le périmètre de l'écheveau de fibres creuses 9 augmente au fur et à mesure du dépôt des fibres dans les coquilles 10. On s'arrange de préférence pour que le dépôt des fibres creuses 3 dans les coquilles 10 se fasse avec une tension constante desdites fibres 3, cette tension étant généralement choisie la plus faible possible. Pour cela un dispositif 13 régulateur de tension des fibres 3 est prévu, ledit dispositif 13, qui sert également avantageusement d'amortisseur d'à-coups, étant relié à un potentiomètre qui asservit la vitesse de rotation du moteur 12 et ainsi de la roue tournante 9. Entre ce dispositif 13 et la roue tournante 9 se trouvent des cylindres de renvoi 15, un guide-fil 16 pour la répartition des fibres 3 sur toute la largeur des coquilles 10, un bac encolleur 17 rempli de colle 18 et muni d'un rouleau 19 d'enduction des fibres 3 lors de leur avancement vers la roue tournante 9, et un vérin de commande 20 qui permet l'enduction cyclique des fibres creuses 3 en abaissant, par un cylindre 22, ces dernières jusqu'à ce qu'elles viennent en contact avec le rouleau 19 pendant un temps prédéterminé, fonction de la vitesse d'avancement des fibres 3 et de la zone d'empotage 21 souhaitée entre deux coquilles 10 consécutives. Le positionnement du rouleau 19 encolleur par rapport à la roue tournante 9 est fonction des zones 21 d'empotage souhaitées sur l'écheveau.

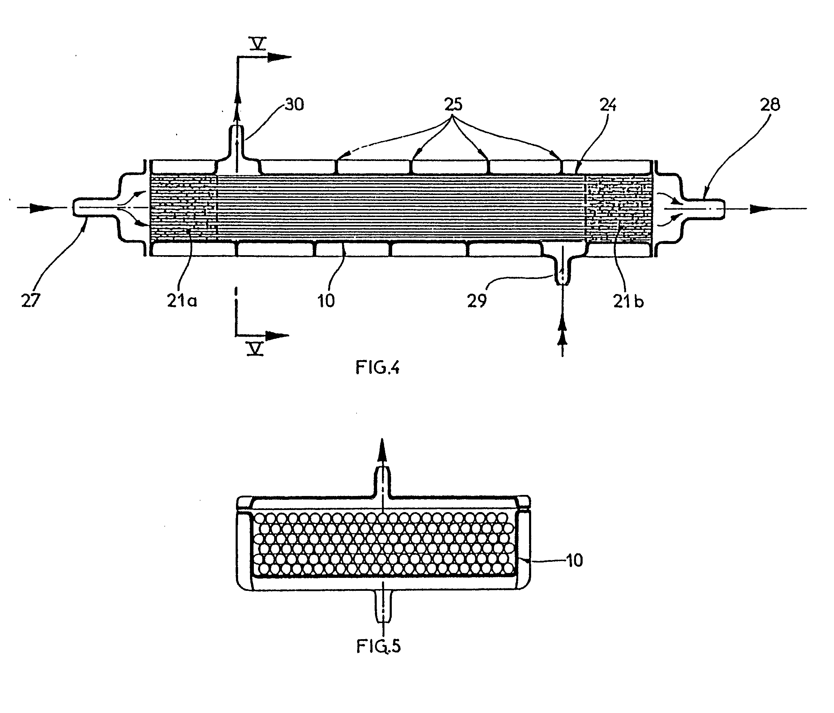

La mise en œuvre du procédé découle ainsi de façon simple de l'utilisation de l'appareillage décrit ci-dessus et représenté fig. 1. Lorsque chaque coquille 10 est remplie de fibres 3, comme cela est représenté fig. 5, pour obtenir chaque faisceau on coupe l'écheveau en 23 entre chaque coquille 10, après avoir arrêté la rotation de la roue 9. On peut cependant, si désiré, placer un couvercle 24 muni par exemple de nervures 25 (voir fig. 4) sur chaque coquille 10 remplie de fibres 3, avant de sectionner l'écheveau entre deux coquilles 10 consécutives disposées sur la roue tournante 9. La fig. 4 représente un appareil final pouvant être obtenu après sectionnement de l'écheveau et mise en place des deux tubulures 27 et 28 aux extrémités de la coquille 10 vers les masses d'empotage 21a et 21b. Dans un tel appareil, un fluide circule à l'intérieur des fibres creuses en entrant par la tubulure 27 et en sortant par la tubulure 28, tandis qu'un autre fluide circule à l'extérieur des fibres, en entrant dans l'appareil par la tubulure 29 et en sortant par la tubulure 30. Ces fluides peuvent être par exemple du sang et un liquide de dialyse, ou du sang et un mélange gazeux contenant de l'oxygène.

De nombreuses variantes du procédé précédemment décrit sont à la portée du technicien. Tout d'abord, il doit être signalé qu'il est possible d'enrouler autour de la roue tournante 9 des fibres non torsadées entre elles, bien qu'il soit souvent avantageux pour un appareil final tel que celui selon la fig. 4 d'avoir des fibres sous forme de torsades pour une meilleure circulation et répartition du fluide circulant à l'extérieur des fibres. Si l'on utilise des fibres non torsadées entre elles, il suffit de dérouler les fibres creuses perpendiculairement à l'axe longitudinal des bobines dévideuses, comme cela est connu par exemple par le brevet américain US-A No 4038190. Lorsque les fibres creuses 3 ne sont pas torsadées, il suffit d'enrouler une seule fibre autour de la roue tournante dans chaque coquille 10. Cependant, il est avantageux d'en enrouler plusieurs à la fois dans la même coquille 10 car, dans ce cas, tout en ayant le même rendement de production de l'appareillage, on peut faire tourner moins vite la roue 9, ce qui permet d'avoir une précision plus grande des zones 21 d'empotage.

L'appareillage pour la mise en œuvre du procédé selon la présente invention peut comprendre deux roues 9 tournantes ou plus, fonctionnant ensemble, par exemple disposées sur un même axe de part et d'autre du bâti 14. Sur chaque roue 9 peuvent se trouver plusieurs coquilles 10 les unes à côté des autres, cela permettant d'obtenir plusieurs coquilles 10 remplies de fibres creuses pour chaque côté de chaque roue polygonale. De même, sur chaque côté de la roue polygonale, il peut y avoir plusieurs coquilles dans le prolongement l'une de l'autre.

L'appareillage pour la mise en œuvre du procédé selon la présente invention permet également d'obtenir des faisceaux encollés à leurs extrémités, lesdits faisceaux n'étant pas solidaires des coquilles, dans lesquelles ils sont formés, après sectionnement de l'écheveau de fibres creuses 3. On peut pour cela, tout en conservant la même roue 9 tournante, choisir une colle 18 qui n'adhère pas dans les coquilles 10 aux zones d'empotage 21. On peut, de manière différente, passer une graisse, par exemple à base de silicone, dans la partie correspondante de la coquille 10, ou placer dans la coquille 10, aux endroits d'empotage, un film sec obtenu par exemple à partir de la colle 18 d'enduction du bac 17. Ce film sec n'adhère donc pas aux extrémités des coquilles 10, et chaque faisceau empoté peut être retiré facilement de ces dernières après sectionnement de l'écheveau entre les coquilles 10 consécutives. Lorsque l'on souhaite obtenir des faisceaux indépendants de tout support, les coquilles peuvent par exemple avoir une section transversale en demi-cercle, les guide-fil 16 permettant d'obtenir un écheveau (et ainsi des faisceaux) de section circulaire. Lorsque l'on désire obtenir des faisceaux indépendants de tout élément de l'appareil final à fibres creuses, il est évidemment possible de se passer des coquilles 10, et il suffit de prévoir des moyens pour supporter l'écheveau à chacun de ses angles uniquement. Les colles utilisées sont connues et sont par exemple à base de résine époxy, de polyuréthanne ou de silicone.

Avec le procédé selon la présente invention, il est possible d'obtenir chaque faisceau encollé solidaire d'un élément de l'appareil final à fibres creuses, comme cela a déjà été montré pour l'appareillage selon la fig. 1. Mais un tel élément peut être également un cadre, comme par exemple ceux décrits dans le brevet américain US-A No 3993816. Les cadres utilisés, tels ceux représentés fig. 1 à 5 du brevet précité, peuvent être munis d'un faisceau empoté sur une de leurs faces, puis être replacés sur la roue tournante 9 pour être munis d'un faisceau sur l'autre face. Un tel élément peut être également un cadre tel que ceux décrits dans les brevets français FR-A Nos 2405735, 2405736 et 2405737. En outre, un tel élément peut être une coquille contenant des compartiments distincts pour des faisceaux, comme cela est représenté et décrit dans le brevet français FR-A No 2323427.

Bien que l'appareillage selon la fig. 1 ait été décrit avec un dispositif pour avoir une vitesse variable de la roue tournante 9, il est cependant possible de supprimer le dispositif 1 d'entraînement à cylindre 2 et d'opérer avec une vitesse constante de la roue tournante 9, comme cela est le cas pour l'appareillage représenté fig. 14 du brevet américain US-A No 4038190. A titre de variante, il est également possible de prévoir deux bacs 17 encolleurs espacés de façon telle qu'à chaque impulsion de vérin 20 les fibres soient encollées à des endroits correspondant à deux zones 21 successives d'encollage sur la roue tournante 9.

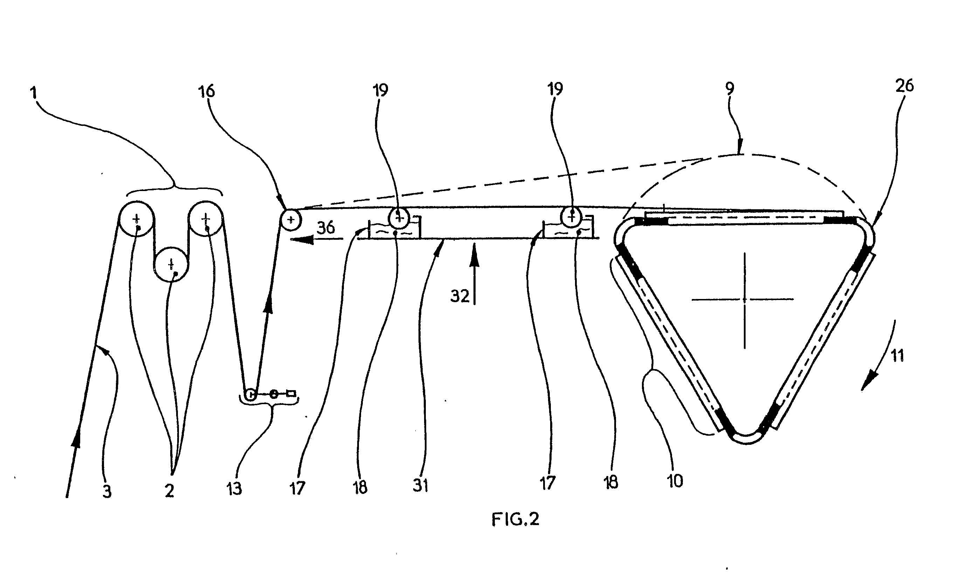

La fig. 2 représente un autre mode de réalisation d'un appareillage pour la mise en œuvre du procédé selon la présente invention. Dans cet appareillage, il n'y a pas de vérin 20 pour abaisser les fibres sur le rouleau 19 encolleur du bac 17 de colle 18 comme c'est le cas pour l'appareillage selon la fig. 1. Les fibres 3 sont encollées par les rouleaux 19 des deux bacs 17 grâce au débattement de la roue tournante 9 elle-même qui fait que la fibre 3 se rapproche ou s'écarte desdits rouleaux 19. Dans ce procédé, l'écheveau 26 de fibres creuses, formé dans des coquilles 10 situées sur une roue tournante 9 triangulaire ayant de grands côtés, n'est pas encollé sur toute sa longueur comprise entre deux coquilles 10 consécutives. Dans ce cas, pour obtenir les faisceaux, on coupe l'écheveau vers les endroits empotés, par exemple entre deux empotages successifs. Il est avantageux, au fur et à mesure de la formation de l'écheveau 26 dans les coquilles, d'élever dans le sens de la flèche 32 le plateau 31 supportant les deux bacs encolleurs 17, pour maintenir leur niveau constant par rapport au niveau du dépôt de la fibre creuse 3 dans les coquilles 10. D'autre part, au cours de la formation de l'écheveau sur le dispositif tournant 9, les faces des zones d'empotage ont tendance à devenir obliques par rapport à l'axe longitudinal de chaque faisceau en préparation. Cela provient du fait que le périmètre de l'écheveau augmente au fur et à mesure de sa formation. Pour obtenir des faces d'empotage perpendiculaires à l'axe longitudinal de chaque faisceau, on peut par exemple éloigner le plateau 31, dans le sens de la flèche 36, vers le dispositif tournant, au fur et à mesure de la formation de l'écheveau. Une manière d'obtenir simultanément l'éloignement du plateau 31 dans le sens de la flèche 36 et son élévation dans le sens de la flèche 32 peut consister à poser le plateau 31 sur la branche supérieure d'un parallélogramme déformable. A titre de variante, au lieu d'élever le plateau 31, il est possible d'abaisser progressivement la roue tournante.

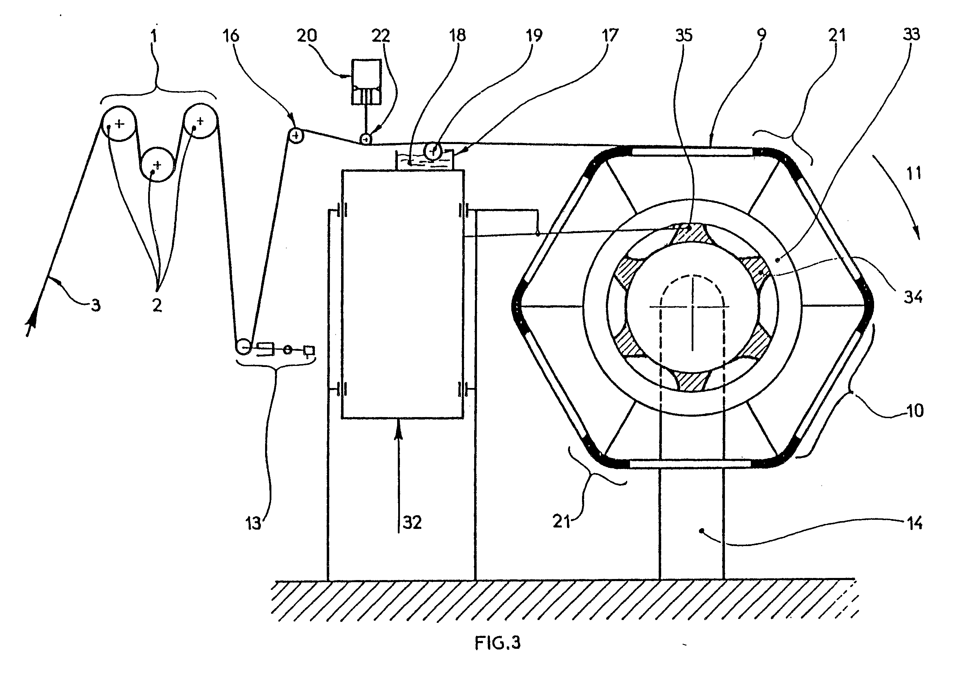

La fig. 3 illustre un appareillage préférentiel pour la mise en œuvre du procédé selon la présente invention, cet appareillage étant représenté au moment où les coquilles 10 sont pratiquement remplies par l'écheveau de fibres creuses 3. Dans cet appareillage (dont le moteur 12 d'entraînement de la roue tournante n'a pas été représenté pour faciliter le dessin) nous retrouvons la plupart des éléments des appareillages des fig. 1 et 2 avec les mêmes chiffres de référence. Comme dans l'appareillage selon la fig. 2, le bac encolleur 17 est élevé selon le sens de la flèche 32 au fur et à mesure du remplissage des coquilles 10 par l'écheveau de fibres creuses 3. Cependant, pour compenser l'augmentation de périmètre de l'écheveau au cours de sa formation dans les coquilles et pour avoir les faces des zones d'empotage (à l'intérieur de chaque coquille) perpendiculaires à l'axe longitudinal de chaque coquille, il est avantageux de prévoir un dispositif qui tient compte de cette augmentation du périmètre de l'écheveau lors de l'encollage des fibres. Pour cela, sur la roue tournante 9 est disposé un disque 33 portant des signaux de commande du vérin 20, lesdits signaux étant par exemple représentés par des zones sombres 34 correspondant aux zones d'empotage 21, ces zones sombres 34 étant captées par une cellule photo-électrique 35 se déplaçant en même temps que le bac encolleur 17, le mouvement de la cellule étant éventuellement amplifié.

Toutes les variantes signalées au sujet du procédé mis en œuvre avec l'appareillage selon la fig. 1 se retrouvent pour les procédés selon les appareillages 2 et 3; en particulier, le dispositif d'entraînement 1 peut être supprimé, et il est possible d'obtenir des faisceaux indépendants ou des faisceaux solidaires par leurs empotages d'éléments de l'appareil final à fibres creuses.

## Revendications

1. Procédé pour l'obtention simultanée d'une pluralité de faisceaux de fibres creuses empotées à leurs extrémités, chaque faisceau étant éventuellement solidaire par ses empotages d'un élément de l'appareil final à fibres creuses, procédé dans lequel au moins une fibre creuse (3) est entraînée par un dispositif tournant (9) qui enroule la fibre (3) autour de lui-même et permet ainsi de réaliser avec cette dernière un écheveau dont le périmètre est de forme polygonale et dont l'axe de rotation, correspondant à celui du dispositif tournant 9, est sensiblement perpendiculaire à la direction d'avancement de la fibre (3) vers ledit dispositif (9), caractérisé en ce que ladite fibre creuse est encollée à intervalles prédéterminés lors de son avancement vers ledit dispositif tournant (9), et en ce qu'après avoir obtenu un écheveau de section voulue de fibres creuses on le coupe vers les endroits empotés pour obtenir chacun des faisceaux.

2. Procédé selon la revendication 1, caractérisé en ce que la fibre creuse (3) est encollée par mise en contact avec des moyens délivrant de la colle, au cours de son avancement vers le dispositif tournant (9).

3. Procédé selon l'une des revendications 1 ou 2, caractérisé en ce que la fibre creuse est encollée par mise en contact avec au moins un rouleau (19)) trempant dans un bac (17) de colle (18).

4. Procédé selon la revendication 3, caractérisé en ce que chaque bac encolleur (17) est élevé au fur et à mesure de la formation de l'écheveau sur le dispositif tournant (9).

5. Procédé selon l'une des revendications 3 ou 4, caractérisé en ce que la fibre creuse (3) est mise en contact avec un rouleau encolleur (19) par des moyens (20, 22) qui abaissent ladite fibre sur ledit rouleau (19), à intervalles prédéterminés.

6. Procédé selon la revendication 5, caractérisé en ce que lesdits moyens (20, 22) abaissent la fibre de façon telle que la durée de contact augmente au fur et à mesure de la formation de l'écheveau sur le dispositif tournant (9), de manière à obtenir les faces d'empotage sensiblement perpendiculaires à l'axe longitudinal de chaque faisceau obtenu après sectionnement de l'écheveau.

7. Procédé selon la revendication 6, caractérisé en ce que les moyens (20, 22) sont actionnés en réponse à des signaux lumineux captés par une cellule photo-électrique (35).

8. Procédé selon la revendication 7, caractérisé en ce que les signaux lumineux correspondent à des zones sombres disposées sur un disque (33) solidaire du dispositif tournant (9).

9. Procédé selon l'une des revendications 3 ou 4, caractérisé en ce que la fibre creuse (3) est mise en contact avec au moins un rouleau encolleur (19) par le débattement du dispositif tournant (9).

10. Procédé selon la revendication 9, caractérisé en ce que chaque rouleau encolleur (19) est éloigné du dispositif tournant au fur et à mesure de la formation de l'écheveau sur le dispositif tournant (9), de manière que les faces d'empotage de chaque faisceau obtenu après sectionnement de l'écheveau soient sensiblement perpendiculaires à l'axe longitudinal dudit faisceau.

## Claims

1. Process for simultaneously obtaining a plurality of bundles of hollow fibres potted at their ends, each bundle optionally being firmly fixed by its potted ends to an element of the final hollow fibre apparatus, in which process at least one hollow fibre (3) is drawn by a rotating device (9), which winds the fibre (3) around it and thus makes it possible to produce, with this fibre, a hank whose perimeter is of polygonal shape and whose axis of rotation, corresponding to that of the rotating device (9), is approximately perpendicular to the direction of advance of the fibre (3) towards the said device (9), characterised in that the said hollow fibre is glued at predetermined intervals during its forward movement towards the said rotating device (9), and in that, after a hank of hollow fibres of desired cross-section has been obtained, it is cut near the potted areas to obtain each of the bundles.

2. Process according to claim 1, characterised in that the hollow fibre (3) is glued by being brought into contact with glue-dispensing means during its forward movement towards the rotating device (9).

3. Process according to claim 1 or 2, characterised in that the hollow fibre is glues by being brought into contact with at least one roller (19) dipping into a trough (17) of glue (18).

4. Process according to claim 3, characterised in that each gluing trough (17) is raised progressively as the hank is formed on the rotating device (9).

5. Process according to claim 3 or 4, characterised in that the hollow fibre (3) is brought into contact with a gluing roller (19) by means (20, 22) which lower the said fibre onto the said roller (19) at predetermined intervals.

6. Process according to claim 5, characterised in that the said means (20, 22) lower the fibre in such a way that the contact time increases progressively as the hank is formed on the rotating device (9), so as to obtain the potting faces approximately perpendicular to the longitudinal axis of each bundle obtained after the hank is cut.

7. Process according to claim 6, characterised in that the means (20, 22) are actuated in response to light signals picked up by a photo-electric cell (35).

8. Process according to claim 7, characterised in that the light signals correspond to dark zones arranged on a disc (33) firmly fixed to the rotating device (9).

9. Process according to claim 3 or 4, characterised in that the hollow fibre (3) is brought into contact with at least one gluing roller (19) by the movement of the rotating device (9).

10. Process according to claim 9, characterised in that each gluing roller (19) is progressively moved away from the rotating device as the hank is formed on the rotating device (9), so that the potting faces of each bundle obtained after the hank is cut are approximately perpendicular to the longitudinal axis of the said bundle.

## Patentansprüche

1. Verfahren zur gleichzeitigen Ausbildung mehrerer Hohlfaserbündel, die an ihren Enden beschichtet sind und bei denen jedes Bündel durch seine Beschichtung gegebenenfalls fest mit einem Element der fertigen Hohlfaservorrichtung verbunden ist, wobei wenigstens eine Hohlfaser (3) durch eine drehende Einrichtung (9) gezogen wird, durch welche die Faser (3) um diese aufgewickelt und die Ausbildung eines Bundes ermöglicht wird, dessen Umfangslinie polygonal geformt ist und dessen Rotationsachse entsprechend der der drehenden Einrichtung (9) im wesentlichen senkrecht zur Laufrichtung der Faser (3) in Richtung auf die Einrichtung (9) liegt, dadurch gekennzeichnet, dass die Hohlfaser während ihrer Laufbewegung in Richtung auf die drehende Einrichtung (9) in vorbestimmten Intervallen mit einem Kleber versehen wird, und dass nach Erhalt eines aus Hohlfasern bestehenden Bundes von gewünschtem Querschnitt dieser an den umhüllten Stellen durchschnitten wird, um jeweils ein Bündel zu erhalten.

2. Verfahren nach Anspruch 1, dadurch gekennzeichnet, dass die Hohlfaser (3) durch Inkontaktbringen mit einer Kleber abgebenden Einrichtung während ihrer Laufbewegung in Richtung auf die drehende Einrichtung (9) mit Kleber beschichtet wird.

3. Verfahren nach einem der beiden Ansprüche 1 oder 2, dadurch gekennzeichnet, dass die Hohlfaser durch Inkontaktbringen mit wenigstens einer Rolle (19) mit Kleber beschichtet wird, die in einem mit Kleber (18) gefüllten Trog (17) eintaucht.

4. Verfahren nach Anspruch 3, dadurch gekennzeichnet, dass jeder Klebertrog (17) entsprechend der Ausbildung des Bundes auf der drehenden Einrichtung (9) angehoben wird.

5. Verfahren nach einem der beiden Ansprüche 3 oder 4, dadurch gekennzeichnet, dass die Hohlfaser (3) mit einer Kleberrolle (19) durch eine Einrichtung (20, 22) in Kontakt gebracht wird, welche in vorbestimmten Intervallen die Faser auf diese Rolle (19) absenkt.

6. Verfahren nach Anspruch 5, dadurch gekennzeichnet, dass die Einrichtung (20, 22) die Faser derart absenkt, dass die Kontaktdauer entsprechend der Ausbildung des Bundes auf der drehenden Einrichtung (9) so verlängert wird, um Beschichtungsflächen zu erhalten, die im wesentlichen senkrecht zur Längsachse jedes nach dem Schneiden des Bundes erhaltenen Bündels liegen.

7. Verfahren nach Anspruch 6, dadurch gekennzeichnet, dass die Einrichtung (20, 22) in Abhängigkeit von durch eine photoelektrische Zelle (35) empfangenen Lichtsignalen betätigt wird.

8. Verfahren nach Anspruch 7, dadurch gekennzeichnet, dass die Lichtsignale dunklen Zonen entsprechen, die auf einer mit der drehenden Einrichtung (9) verbundenen Scheibe (33) angeordnet sind.

9. Verfahren nach einem der beiden Ansprüche 3 oder 4, dadurch gekennzeichnet, dass die Hohlfaser (3) mit wenigstens einer Kleber- bzw. Beschichtungsrolle (19) durch Einschlag der drehenden Einrichtung (9) in Kontakt gebracht wird.

10. Verfahren nach Anspruch 9, dadurch gekennzeichnet, dass jede Beschichtungsrolle (19) entsprechend der Ausbildung des Bündels auf der drehenden Einrichtung (9) so weit von der drehenden Einrichtung wegliegt, dass die Beschichtungsflächen jedes nach dem Schneiden des Bundes erhaltenen Bündels im wesentlichen senkrecht zur Längsachse dieses Bündels liegen.

FIG.1

FIG.2

0 041 467

FIG.3

0 041 467

FIG.4

FIG.5

0 041 467